Europäisches Patentamt

European Patent Office

Office européen des brevets

(11) Veröffentlichungsnummer: **0 356 668**
**A2**

## (12) EUROPÄISCHE PATENTANMELDUNG

(21) Anmeldenummer: 89112649.2

(22) Anmeldetag: 11.07.89

(51) Int. Cl.5: **A23L 2/02 , A23L 2/16 , A23P 1/00 , A23B 7/04**

(30) Priorität: 02.09.88 DE 3829868

(43) Veröffentlichungstag der Anmeldung:
07.03.90 Patentblatt 90/10

(84) Benannte Vertragsstaaten:
AT BE CH DE ES FR GB GR IT LI LU NL SE

(71) Anmelder: **Deutsche Granini GmbH & Co. KG.**
**Kammerratsheide 31a Postfach 2023**
**D-4800 Bielefeld 1(DE)**

(72) Erfinder: **Geiss, Helmut**
**Hindemithweg 10**
**D-4815 Schloss Holte/Stukenbrock(DE)**
Erfinder: **Heil, Angelika**
**Rosenstrasse 13**
**D-6229 Walluf(DE)**
Erfinder: **Szczecinski, Hans-Joachim, Dr.**
**In der Loh 1**
**D-4503 Dissen(DE)**

(74) Vertreter: **Stracke, Alexander, Dipl.-Ing. et al**
**Jöllenbecker Strasse 164**
**D-4800 Bielefeld 1(DE)**

(54) Verfahren zum Herstellen eines fruchthaltigen Getränkes.

(57) Durch das erfindungsgemäße Verfahren soll ein hochwertiges, fruchthaltiges Getränk herstellbar sein, welches trotz einer verhältnismäßig langen Lagerzeit sich qualitativ nicht verschlechtert. Außerdem soll das Gewicht für den Transport wesentlich herabgesetzt werden.

Ein Fruchtfleisch und Fruchtkonzentrat enthaltendes Gemisch wird trinkmengengerecht portioniert, diese Portionen werden durch Abkühlung in feste Formlinge verwandelt. Durch Zugabe einer entsprechenden Menge einer Aufbereitungsflüssigkeit, beispielsweise Wasser, wird einer trinkbare Menge des Getränkes vom Verbraucher selbst hergestellt.

Das erfindungsgemäße Verfahren ist besonders für die Zubereitung von Orangensaft, Grapefruitsaft, Zitrussaft o.dgl. im Haushalt anwendbar.

EP 0 356 668 A2

## Verfahren zum Herstellen eines fruchthaltigen Getränkes

Die vorliegende Erfindung betrifft ein Verfahren zum Herstellen eines fruchthaltigen Getränkes aus einem zumindest Fruchtfleisch und Fruchtkonzentrat enthaltenden Gemisches, aus dem durch Zugabe einer Aufbereitungsflüssigkeit das Getränk hergestellt wird.

Die in Rede stehenden Getränke werden allgemein als Fruchtsaftgetränke bezeichnet. Die Ausgangsprodukte sind alle vorkommenden Frucht- und Obstarten.

Nach dem bisher bekannten Verfahren wird das Getränk in einer großen Menge trinkfertig hergestellt, d.h. so wie es dem Verbraucher angeboten wird, und in Flaschen abgefüllt. Daraus ergibt sich auch eine relativ lange Lagerzeit für das fertige Getränk, die eine angepaßte Behandlung, z.B. ein Pasteurisieren, erfordert. Dieses an sich bewährte Verfahren hat jedoch verschiedene Nachteile. Das Pasteurisieren ist im Sinne eines die Qualität vermindernden Kocheffektes zu sehen. Trotzdem ist das Getränk nur über eine vorgegebene Zeit lagerfähig, in der sich die Qualität des Getränkes jedoch noch weiter verschlechtert. Üblicherweise werden derartige Getränke in Pfandflaschen abgefüllt. Daraus ergibt sich ein für den Verbraucher als lästig empfundener Rücktransport. Außer dem ist das Gewicht beim Transport äußerst hoch, bedingt durch die bereits zugegebene Aufbereitungsflüssigkeit und das Gewicht der Flasche.

Der vorliegenden Erfindung liegt die Aufgabe zugrunde, ein Verfahren der eingangs genannten Art so weiterzuentwickeln, daß die Qualität des Getränkes und die zulässige Lagerzeit wesentlich erhöht werden, ohne daß sich die Qualität während der Lagerung verändert, und daß das Transportgewicht wesentlich verringert wird.

Die gestellte Aufgabe wird erfindungsgemäß dadurch gelöst, daß das Gemisch trinkmengengerecht portioniert wird, daß aus den Portionen unter Abkühlung feste Formlinge gebildet werden, daß aus mindestens einem Formling durch Zugabe der Aufbereitungsflüssigkeit eine trinkbare Menge des Getränkes hergestellt wird.

Vom Verbraucher werden heute besonders hochwertige Getränke verlangt. Das als Ausgangsprodukt zu sehende Gemisch wird in der Branche als Fruchthalbkonzentrat bezeichnet und enthält Fruchtkonzentrat, Fruchtfleisch und normalwerweise auch Fruchtaroma mit einem insgesamt hohen Anteil von Trockensubstanz. Dieser Anteil der Trockensubstanz wird in Grad Brix angegeben. Je höher dieser Wert liegt, desto hochwertiger ist das Konzentrat. Die Temperatur, bei der das Gemisch von einem zähflüssigen Zustand in einen festen Zustand übergeht, liegt unter 0° C und fällt mit einem zunehmenden Anteil von Trockensubstanz ab. Da man davon ausgehen kann, daß heute im Haushalt Gefriergeräte vorhanden sind, kann der Endverbraucher nunmehr diese Formlinge kaufen und zu Hause lagern. Bei Bedarf erfolgt dann das Zubereiten des Getränkes, beispielsweise durch Auflösen in Trinkwasser. Die Größe der Formlinge könnte beispielsweise auf das Volumen eines üblichen Trinkglases von 0,2 l Inhalt ausgelegt sein. Denkbar ist jedoch auch, daß mehrere Formlinge für eine derartige Menge verwendet werden. Soll jedoch eine Tagesration im Haushalt hergestellt werden, ist es notwendig, eine entsprechend höhere Anzahl von Formlingen aufzulösen. Durch das erfindungsgemäße Verfahren erfolgt die Zubereitung des Getränkes unmittelbar vor dem Trinken, so daß die für eine Lagerung notwendige Pasteurisierung entfällt. Man kann davon ausgehen, daß bei Anwendung des erfindungsgemäßen Verfahrens eine Qualität des Getränkes erreicht wird, die der des aus Früchten frisch ausgepreßten Saftes sehr nahe kommt. Der gekühlte Formling bewirkt noch eine als angenehm empfundene Verringerung der Temperatur der Aufbereitungsflüssigkeit. Da das eigentliche Ausgangsprodukt im Gefriergerät gelagert wird, wird die Lagerzeit wesentlich erhöht, ohne daß sich die Qualität verschlechtert. Die Verringerung des Gewichts beim Transport liegt bei ca. 80 Prozent gegenüber dem in Flaschen abgefüllten Getränk. Dies gilt sowohl für den Transport in großen Mengen, beispielsweise zu einem Supermarkt, als auch beim Transport durch den Käufer vom Supermarkt in den Haushalt.

Da die Formlinge bei Lagerung in einem Haushaltsgefriergerät mit einer Betriebstemperatur von z.B. -18° C im festen Zustand bleiben müssen, ist vorgesehen, daß zur Bildung der Formlinge die Portionen zumindest auf diese Temperatur abgekühlt werden. Bei dieser Temperatur ist das Gemisch bereits erstarrt, wenn die Trockensubstanz unter 42° Brix liegt. Diese Formlinge können dann in haushaltsgerechten Verkaufsverpackungen verpackt werden, in der sie dann bis zum Verbrauch gelagert werden.

Wird nun ein besonders hochwertiges Gemisch verarbeitet, welches bei der Betriebstemperatur von Haushaltskühlgeräten noch nicht erstarrt ist, ist in Weiterbildung des Verfahrens vorgesehen, daß jeder Formling eine gefrorene Außenbeschichtung aufweist, die eine aus einer Portion des Gemisches gebildete zähflüssige Füllung zusammenhält. Um diese Außenbeschichtung in besonders einfacher Weise herstellen zu können, ist sie aus einer Flüssigkeit, deren Gefrierpunkt vorzugsweise im Bereich von 0° C liegt. Dadurch ist es wiederum möglich, die Formlinge in Haushaltskühlgeräten zu lagern, obwohl die Füllung bei diesen Temperaturen noch nicht in den festen Zustand übergegangen ist. In einer besonders energiesparenden Verfahrensweise wird zuerst aus der gefrierfähigen Flüssigkeit mittels einer der Kontur der Formlinge entsprechenden Form durch Gefrieren der Flüssigkeit ein Hohlkörper gebildet, der die Außenbeschichtung des Formlings bildet, wonach in jeden Hohlkörper eine Portion des Gemisches eingegeben wird. Bei dieser Verfahrensweise muß die die äußere Beschichtung bildende Flüssigkeit so weit abgekühlt werden, daß sie erstarrt. Die in den Hohlkörper einzubringende Portion muß nur so weit abgekühlt werden, daß die äußere Beschichtung beim Einbringen der Portion nicht schmilzt. Je nach den Temperaturen kann nach der Herstellung eine weitere Abkühlung, beispielsweise auf die Betriebstemperatur von Haushaltsgefriergeräten erfolgen.

Nach einer anderen Verfahrensweise zur Herstellung des Formlings mit einer gefrorenen Außenbeschichtung und einer zähflüssigen Füllung können zunächst die Portionen des Gemisches bis zur Erstarrung , beispielsweise auf -60° C abgekühlt werden. Diese Blöcke werden dann zur Bildung der gefrorenen Außenbeschichtung entweder mit einer Flüssigkeit besprüht oder in eine Flüssigkeit getaucht. Diese Verfahrensweise ist in der technischen Ausführung besonders einfach, da es verhältnismäßig einfach ist, in der industriellen Fertigung das Gemisch bis zur Erstarrung abzukühlen. Das Gemisch ist auf eine Temperatur abzukühlen, die wesentlich tiefer liegt als die Betriebstemperatur von Haushaltskühlgeräten. Damit die aufgesprühte Flüssigkeit sofort gefriert, liegt deren Temperatur zweckmäßigerweise geringfügig über dem Gefrierpunkt. Sofern als Sprühflüssigkeit Wasser oder ein stark wasserhaltiges Gemisch verwendet wird, liegt die Temperatur geringfügig über 0° C. Im Fall des Tauchverfahrens muß die Badtemperatur mittels Thermostat nahe über dem Gefrierpunkt der Badflüssigkeit gehalten werden. Auch die eine äußere gefrorene Beschichtung aufweisenden Formlinge werden nach ihrer Herstellung in haushaltsgerechten Verkaufsverpackungen verpackt und bis zum Zubereiten des Getränks in Gefriergeräten gelagert, wenn von den jeweiligen Transportmitteln abgesehen wird.

In weiterer Ausgestaltung der Erfindung ist vorgesehen, daß die ggf. auf den gekühlten Formling durch Tauchen oder Sprühen aufgebrachte Flüssigkeit, die die spätere gefrorene Außenbeschichtung bildet, und /oder die Aufbereitungsflüssigkeit aromatisiert ist bzw. sind. Es könnte dann ein beispielsweise aus drei Fruchtarten bestehendes Mixgetränk hergestellt werden. Anstelle einer aromatisierten Flüssigkeit ist es auch denkbar, daß die auf den Formling aufgebrachte Flüssigkeit ein Fruchtkonzentrat ist.

Nach diesem Verfahrensschritt wird wiederum ein Mixgetränk hergestellt, welches ausschließlich aus Naturprodukten hergestellt ist. Es ist dann allerdings notwendig, daß als Aufbereitungsflüssigkeit im Haushalt ein entsprechendes Getränk bevorratet wird. Obwohl eigentlich diese Bevorratung vermieden werden soll, bietet auch dieses Verfahren noch Vorteile, da die Menge wesentlich reduziert werden kann. Als Aufbereitungsflüssigkeit und auch als auf einen gekühlten Formling aufzubringende Flüssigkeit wird normalerweise Wasser verwendet. Die Temperatur des Wassers liegt dann etwas oberhalb des Gefrierpunktes, beispielsweise bei 1° C.

Damit die Formlinge verbrauchergerecht anzubieten sind, sind sie zweckmäßigerweise als Würfel, Kugel oder Ei ausgebildet, wobei mehrere in einer haushaltsgerechten Verkaufspackung, beispielsweise in einem Schlauchbeutel verpackt sind. Dabei kann jeder Formling in einer eigenen Kammer liegen. Der Schlauchbeutel könnte beispielsweise aus einer schrumpffähigen Folie hergestellt sein. Eine andere Möglichkeit besteht darin, daß zum Herstellen eines Formlings ein Trinkbecher verwendet wird, wobei zumindest auf einen Teil der Innenfläche, beispielsweise auf den Boden, das Gemisch aufgebracht wird. Die Zubereitung ist dann besonders einfach. Da normalerweise die Trinkbecher konisch ausgebildet sind, können sie trotzdem platzsparend gestapelt werden. Das Gemisch kann wiederum gekühlt werden und ggf. mit einer Flüssigkeit besprüht werden.

In Weiterbildung des Verfahrens ist noch vorgesehen, daß die auf den Formling aufzubringende Flüssigkeit zur Bildung der gefrorenen Außenbeschichtung und/oder die Aufbereitungsflüssigkeit mit einem einen Sprudeleffekt bewirkenden Stoff, wie z.B. Kohlendioxid, versetzt ist. Dadurch wird auch die wohltuende Wirkung von sprudelnden Getränken erreicht. In Weiterbildung des Verfahrens ist vorgesehen, den den Sprudeleffekt bewirkenden Stoff beispielsweise als wässrige Lösung vorzufrieren und in ein vorgefrorenes Fruchtkonzentrat einzuarbeiten. Als den Sprudeleffekt bewirkender Stoff können beispielsweise Salz der Kohlensäure verwendet werden.

Das erfindungsgemäße Verfahren ist zur Herstellung aller vorkommenden fruchthaltigen Getränke anwendbar. Besonders bekannte Getränke sind Orangensaft und Grapefruitsaft.

## Ansprüche

1. Verfahren zum Herstellen eines fruchthaltigen Getränkes aus einem zumindest Fruchtfleisch und Fruchtkonzentrat enthaldenen Gemisches, aus dem durch Zugabe einer Aufbereitungsflüssigkeit das Getränk hergestellt wird, **dadurch gekennzeichnet,** daß das Gemisch trinkmengengerecht portioniert wird, daß aus den Portionen durch Abkühlung feste Formlinge gebildet werde, und daß aus mindestens einem Formling durch Zugabe der Aufbereitungsflüssigkeit eine trinkbare Menge des Getränkes hergestellt wird.

2. Verfahren nach Anspruch 1, dadurch gekennzeichnet, daß zur Bildung der Formlinge die Portionen zumindest auf eine Temperatur abgekühlt werden, die der Betriebstemperatur von Haushaltsgefriergeräten, beispielsweise -18° C, entspricht.

3. Verfahren nach Anspruch 1, dadurch gekennzeichnet, daß jeder Formling eine gefrorene Außenbeschichtung aufweist, die eine aus einer Portion des Gemisches gebildete zähflüssige Füllung zusammenhält.

4. Verfahren nach Anspruch 3, dadurch gekennzeichnet, daß die Außenbeschichtung aus einer Flüssigkeit gebildet ist, deren Gefrierpunkt im Bereich von 0° C liegt.

5. Verfahren nach Anspruch 3, dadurch gekennzeichnet, daß zuerst aus der gefrierfähigen Flüssigkeit mittels einer der Kontur der Formlinge entsprechenden Form durch Gefrieren der Flüssigkeit ein Hohlkörper gebildet wird, der die Außenbeschichtung der Formlinges bildet, wonach in jeden Hohlkörper eine Portion des Gemisches eingegben wird.

6. Verfahren nach Anspruch 3, dadurch gekennzeichnet, daß die Portionen des Gemisches bis zur Erstarrung abgekühlt werden, und daß der erstarrte Block zur Bildung der gefrorenen Außenbeschichtung mit einer Flüssigkeit besprüht oder in ein Flüssigkeitsbad eingetaucht wird.

7. Verfahren nach Anspruch 6, dadurch gekennzeichnet, daß die Temperatur der auf den erstarrten Block zu sprühenden Flüssigkeit oder die Temperatur des Flüssigkeitsbades geringfügig über ihren Gefrierpunkt liegt.

8. Verfahren nach einem oder mehreren der vorhergehenden Ansprüche, dadurch gekennzeichnet, daß die gefrorene Außenbeschichtung der Formlinge und/oder die Aufbereitungsflüssigkeit aromatisiert ist bzw. sind.

9. Verfahren nach einem oder mehreren der vorhergehenden Ansprüche, dadurch gekennzeichnet, daß die gefrorene Außenbeschichtung der Formlinge und/oder die Aufbereitungsflüssigkeit ein Fruchtkonzentrat ist.

10. Verfahren nach einem oder mehreren der vorhergehenden Ansprüche, dadurch gekennzeichnet, daß die Formlinge als Würfel, Kugel oder Ei ausgebildet sind, und daß mehrere Formlinge in einer haushaltsgerechten Verkaufspackung, beispielsweise in einem aus einer schrumpffähigen Folie hergestellten Schlauchbeutel angeordnet sind.

11. Verfahren nach Anspruch 1, dadurch gekennzeichnet, daß zum Herstellen eines Formlings ein Trinkbecher verwendet wird, wobei zumindest auf einen Teil der Innenfläche, beispielsweise auf die Innenfläche des Bodens das Gemisch aufgebracht, abgekühlt und ggf. anschließend mit Flüssigkeit besprüht wird.

12. Verfahren nach Anspruch 1, dadurch gekennzeichnet, daß die gefronene Außenbeschichtung und/oder die Aufbereitungsflüssigkeit mit einem einen Sprudeleffekt bewirkenden Stoff, wie z.B. Kohlendioxid, versetzt ist.